# EUROPÄISCHE PATENTSCHRIFT

(11) **EP 2 741 200 B1**
(45) Veröffentlichungstag und Bekanntmachung des Hinweises auf die Patenterteilung: **16.10.2019**
(21) Anmeldenummer: 13195338.2
(22) Anmeldetag: 02.12.2013
(51) Int. Cl.: G06F 3/0488

(54) **Verfahren und Vorrichtung zum Bedienen eines elektronischen Gerätes**
Method and device for operating an electronic device
Procédé et dispositif de commande d'un appareil électronique

(30) Priorität: 08.12.2012 DE 102012024055
(43) Veröffentlichungstag der Anmeldung: 11.06.2014
(73) Patentinhaber: Volkswagen Aktiengesellschaft, 38440 Wolfsburg (DE)
(72) Erfinder: Wengelnik, Heino, Dr., 38442 Wolfsburg (DE); Czelnik, Mark Peter, 38440 Wolfsburg (DE)

(56) Entgegenhaltungen:
- WO-A1-2011/047037
- DE-A1-102006 028 046

## Beschreibung

Die vorliegende Erfindung betrifft ein Verfahren und eine Vorrichtung zum Bedienen eines elektronischen Geräts eines Kraftfahrzeugs.

Eine Vielzahl von elektronischen Geräten aus so unterschiedlichen Bereichen wie der Telekommunikation, der Unterhaltungselektronik, der Haushaltselektronik, der Anlagentechnik und der Systemsteuerung in Fahrzeugen aller Art, insbesondere von Kraftfahrzeugen, Schienenfahrzeuge oder Flugzeugen, weisen oft eine große Anzahl von Schaltern und Bedienknöpfen zur Steuerung verschiedenster Funktionen und zur Dateneingabe auf. Gerade in einem Fahrzeug, insbesondere einem Kraftfahrzeug, gibt es zahlreiche Funktionseinrichtungen, die erforderlich sind, um das Fahrzeug zu führen, die der Sicherheit und dem Komfort der Fahrzeuginsassen dienen und die den Fahrzeuginsassen schließlich Informationen und Warnungen anzeigen. Außerdem dienen die Funktionseinrichtungen des Fahrzeugs der Kommunikation der Fahrzeuginsassen mit außerhalb des Fahrzeugs befindlichen Kommunikationspartnern. Zu den Funktionseinrichtungen eines Fahrzeugs zählen beispielsweise Einrichtungen zum Steuern der lichttechnischen Einrichtungen des Fahrzeugs, der Klimatisierungsvorrichtung, der Fahrerassistenzsysteme, des Navigationssysteme, der Telekommunikationssysteme oder der Multimediasysteme. Um diese Funktionseinrichtungen zu bedienen, ist zumindest eine Einrichtung für Eingaben des Nutzers und eine Anzeigevorrichtung zum Darstellen von Informationen der Funktionseinrichtungen erforderlich. Ferner wird die Bedienung der Funktionseinrichtungen häufig von Anzeigen auf einem Display unterstützt, welches beispielsweise in der Mittelkonsole des Fahrzeugs angeordnet ist.

Gerade im Bereich der Fahrzeugfunktionen wird jedoch ein Bedienkonzept benötigt, das eine Steuerung der großen Vielzahl an Funktionen mit möglichst wenigen manuellen Eingabeelementen ermöglicht, damit der Benutzer so wenig wie möglich von seiner Hauptaufgabe, nämlich dem Führen des Fahrzeugs, abgelenkt wird.

So wird heute in zahlreichen Fahrzeugen ein Bedienkonzept realisiert, das eine graphische Anzeige, beispielsweise einen LCD-Monitor in Verbindung mit einem sogenannten Dreh-Drücksteller als zentraler Eingabeeinheit umfasst. Dabei werden die meisten Zusatzfunktionen in einem Fahrzeug über ein menügesteuertes zentrales Display dargestellt, wobei durch Drehen des Dreh-Drückstellers einzelne Menüeinträge selektiert und durch Betätigen des Dreh-Drückstellers ausgewählt werden können. Da nicht mehr jeder Funktion ein eigenes Bedienelement zugeordnet ist, werden deutlich weniger einzelne manuelle Schalter und Bedienknöpfe benötigt.

Seit einiger Zeit werden elektronische Geräte beispielsweise in Fahrzeugen auch über Bedienfelder gesteuert, die eine berührungsempfindliche Oberfläche aufweisen, die mittels eines Stiftes oder mit des Fingers des Benutzers bedient werden kann. Die berührungsempfindliche Oberfläche kann sich beispielsweise über einem Display selbst befinden, so dass beispielsweise einzelne auf dem Display angezeigte Listeneinträge durch Berühren des jeweiligen Bereichs des Displays ausgewählt werden können. Das Bedienfeld mit der berührungsempfindlichen Oberfläche kann aber auch als ein sogenanntes Touchpad ausgebildet sein, mit dem beispielsweise auf einem zugeordneten Display ein Cursor beweg oder in Listen gescrollt werden kann oder mit dem einzelne Elemente ausgewählt und zugeordnete Funktionen aktiviert werden können. Über berührungsempfindliche Oberflächen können beispielsweise auch Buchstaben oder Ziffern per Handschrifterkennung eingegeben.

Die berührungsempfindliche Oberfläche kann dabei mit unterschiedlichen Technologien realisiert werden. Beispielsweise ist es möglich, dass das Touchpad auf einen Druck eines Fingers reagiert oder dass ein Finger auf bzw. über dem Touchpad kapazitiv erkannt wird. Außerdem kann eine berührungsempfindliche Oberfläche und die zugehörige Auswertesoftware so ausgelegt sein, dass Berührungen und Gesten mehrerer Finger detektieren und geeignet auswertet werden können.

Die Funktionalität der berührungsempfindlichen Oberfläche des Bedienfeldes kann von der jeweiligen Auswahl- oder Steuerfunktion abhängig sein. In der deutschen Patentanmeldung DE-A-103 204 579 wird beispielsweise ein berührempfindliches Bedienfeld beschrieben, das einerseits zur Auswahl von Menüpunkten taktil erfassbar strukturiert werden kann und das andererseits zur Eingabe von Handschriften geglättet werden kann. In ähnlicher Weise wird in der deutschen Patentanmeldung DE-A-10 2009 052 928 A1 ein Touchpad mit dreidimensionaler Konturierung beschrieben, wobei die Konturierung statisch oder kontextabhängig veränderlich sein kann. Schließlich wird in der internationalen Patenanmeldung WO 2007/128633 A1 ein Touchpad beschrieben, das einen mechanischen Aktuator aufweist, der eine haptische und/oder auditive Rückmeldung einer auf den Touchpad getätigten Auswahl ermöglicht.

Die in den oben genannten Patentanmeldungen beschriebenen Touchpads bzw. berührungsempfindlichen Bedienfelder ermöglichen bis zu einem gewissen Grad eine Bedienung des zugordneten elektronischen Geräts ohne visuelle Kontrolle und verringern so beim Einsatz in einem Fahrzeug die Ablenkung des Fahrers vom Führen des Fahrzeugs.

Ein ständig aktives Touchpad erhöht aber die Gefahr von unbeabsichtigten Betätigungen, die dann wieder aufwändig korrigiert werden müssen, insbesondere wenn sich das Touchpad in einem Bereich befindet, der schon bei gewöhnlichem Führen des Fahrzeugs ständigen manuellen Eingriffen ausgesetzt ist, wie dies beispielsweise bei einer Anordnung des Touchpads auf der Mittelkonsole in der Nähe der Gangschaltung oder gar bei einer Anordnung des Touchpads im Lenkrad des Fahrzeugs der Fall ist.

In der deutschen Patentanmeldung DE 10 2006 028046 A1 wird ein Verfahren zum Bedienen eines elektronischen Geräts in einem Kraftfahrzeug beschrieben, bei dem der Nutzer einen berührungsempfindlichen Bildschirm, beispielsweise durch Annährung eines Fingers an den Bildschirm, zwischen einem Bedienmodus mit aktivierter Touch-Funktionalität und einem Informationsmodus mit deaktivierter Touch-Funktionalität, aber verbesserter Informationsdarstellung hin- und her schalten kann.

Der vorliegenden Erfindung liegt daher das technische Problem zu Grunde, ein Verfahren und eine Vorrichtung zum Bedienen eines elektronischen Geräts mittels eines dem elektronischen Gerät zugeordneten Bedienfeldes mit berührungsempfindlicher Oberfläche anzugeben, das eine zuverlässige Bedienung eines Bedienfeldes, ohne den Benutzer von einer Haupttätigkeit, wie beispielsweise dem Führen eines Fahrzeugs, abzulenken, wobei gleichzeitig die Gefahr von Fehleingaben minimiert werden soll.

Gelöst wird dieses technische Problem durch das Verfahren gemäß vorliegendem Anspruch 1 und die Vorrichtung gemäß vorliegendem Anspruch 7. Vorteilhafte Weiterbildungen des erfindungsgemäßen Verfahrens und der erfindungsgemäßen Vorrichtung sind Gegenstände der abhängigen Patentansprüche.

Die Erfindung betrifft demnach ein Verfahren zum Bedienen eines elektronischen Geräts eines Kraftfahrzeugs, bei dem wenigstens eine Funktion des elektronischen Geräts über ein Bedienfeld mit einer berührungsempfindlichen Oberfläche in einem Lenkrad oder einer Mittelkonsole des Kraftfahrzeugs gesteuert wird, wobei die berührungsempfindliche Oberfläche als Touchpad ausgebildet ist und bei laufendem elektronischen Gerät zumindest zwischen einem inaktiven und einem aktiven Zustand umschaltbar ist, wobei die Umschaltung abhängig davon erfolgt, ob eine Bediensituation eine Eingabe über die berührungsempfindliche Oberfläche erwartet, und man dem Benutzer den aktuellen Aktivierungszustand der berührungsempfindlichen Oberfläche signalisiert. Durch eine deutliche Signalisierung des Aktivitätszustands der berührungsempfindlichen Oberfläche wird die Ablenkung des Benutzers von seiner Haupttätigkeit so weit wie möglich reduziert, da er nur dann eine Bedienung des Touchpads in Angriff nehmen wird, wenn sich dieses tatsächlich im aktivierten Zustand befindet und eine Eingabe erwartet.

Bevorzugt erfolgt die Signalisierung des Aktivierungszustandes der berührungsempfindlichen Oberfläche optisch und/oder akustisch. Beispielsweise kann das Bedienfeld mit der berührungsempfindlichen Oberfläche einen Rahmen aufweisen in den Leuchtelemente, wie beispielsweise lichtemittierende Dioden (LEDs), eingelassen sind, welche den Aktivierungszustand der berührungsempfindlichen Oberfläche signalisieren. Im einfachsten Fall sind die Leuchtelemente bei inaktiver berührungsempfindlicher Oberfläche ausgeschaltet und bei aktiver berührungsempfindlicher Oberfläche eingeschaltet. Es ist auch möglich, die berührungsempfindliche Oberfläche selbst mit einer Hintergrundbeleuchtung zu versehen, die den Aktivierungszustand anzeigt, bzw. die berührungsempfindliche Oberfläche mit einer selbstleuchtenden Schicht, wie beispielsweise organischen lichtemittierende Dioden (OLEDs) zu versehen. Diese Art der optischen Signalisierung ist besonders bevorzugt, wenn sich das Bedienfeld mit der berührungsempfindlichen Oberfläche in unmittelbaren Sichtbereich des Benutzers befindet, also beispielsweise wenn die berührungsempfindliche Oberfläche im Lenkrad eingelassen ist. Wenn sich die berührungsempfindliche Oberfläche beispielsweise in der Mittelkonsole befindet, kann die berührungsempfindliche Oberfläche auch mit einem Anzeigeelement im Armaturenbrett oder im Lenkrad gekoppelt sein, welches den Aktivierungszustand der berührungsempfindlichen Oberfläche optisch signalisiert. Zur akustischen Signalisierung des Aktivierungszustandes der berührungsempfindlichen Oberfläche kann das Bedienelement mit einem dezidierten Lautsprecher gekoppelt oder an das Audiosystem des elektronischen Geräts oder des Fahrzeugs angebunden sein.

Die akustische Signalisierung kann auch durch tieffrequente Signale erfolgen, die beispielsweise durch Vibration wahrgenommen werden, jedoch sind akustische Signale im hörbaren Frequenzbereich bevorzugt, da vibratorische Rückmeldungen in modernen Fahrzeugen auch von anderen Systemen, wie beispielsweise Spurassistenten, verwendet werden.

Mit optischen und hörbar akustischen Rückmeldungen können auch komplexere Informationen übermitteltet werden, beispielsweise durch unterschiedliche Farben und/oder Blinksequenzen im Fall der optischem Signalisierung oder durch komplexere auditive Muster (sogenannte Earcons oder Auditory Icons) im Fall der akustischen Signalisierung. Beim Aktivieren der berührungsempfindlichen Oberfläche kann beispielsweise ein kurzes akustisches Signal, das die Aufmerksamkeit des Benutzers weckt, mit einem optischen Signal, das während der gesamten Aktivierungsdauer der berührungsempfindlichen Oberfläche angezeigt wird, kombiniert werden.

Das erfindungsgemäße Verfahren und die erfindungsgemäße Vorrichtung ermöglichen es daher, dass die berührungsempfindliche Oberfläche nicht nur gemeinsam mit dem zu bedienenden elektronischen Gerät ein- und ausgeschaltet wird, sondern dass die Aktivierung der berührungsempfindlichen Oberfläche kontextabhängig bei bereits laufendem elektronischen Gerät in Abhängigkeit von der jeweiligen Eingabesituation erfolgt. So kann beispielsweise in Bediensituationen, die keine Eingabe über die berührungsempfindliche Oberfläche erfordern, die berührungsempfindliche Oberfläche komplett inaktiviert werden. Betrachtet man beispielsweise ein Multifunktionsgerät, wie das Infotainmentsystem eines Fahrzeugs, so kann man sich vorstellen, dass die Bedienung der Klimaanlage keine Touchpad-Eingaben erfordert. Wählt man also beispielsweise über einen entsprechenden Schalter oder den oben angesprochenen Dreh-Drücksteller die Steuerung der Klimaanlage aus, so wird gleichzeitig das Bedienfeld mit der berührungsempfindlichen Oberfläche deaktiviert. Somit wird einerseits die Gefahr von Fehleingaben verringert und anderseits erkennt der Benutzer anhand der fehlenden optischen oder akustischen Signalisierung, dass die berührungsempfindliche Oberfläche inaktiv ist und er wird nicht durch vergebliche Eingabeversuche vom Führen des Fahrzeugs abgelenkt. In einem anderen Betriebszustand, beispielsweise zur Zieleingabe im Navigationssystem, können das Touchpad und eine in der zugehörigen Steuereinrichtung implementierte Handschrifterkennung aktiviert werden. Der Benutzer braucht dann beispielsweise nicht mehr durch lange Listen scrollen oder mühsam einzelne Buchstaben mit dem Dreh-Drücksteller auswählen, sondern kann die Zieladresse durch wenige über das Bedienfeld mit der berührungsempfindlichen Oberfläche eingegebene Buchstaben oder Ziffern festlegen.

Gemäß einer Variante des erfindungsgemäßen Verfahrens werden neben dem inaktiven und dem aktiven Zustand weitere Betriebszustände der berührungsempfindlichen Oberfläche signalisiert. Beispielsweise kann durch eine geeignete optische und/oder akustische Signalisierung unterschieden werden, ob die berührungsempfindliche Oberfläche eine Geste, wie beispielsweise eine Scrollbewegung, oder eine Eingabe von Buchstaben oder Ziffern zur Handschriftenerkennung erwartet. Optisch kann diese beispielsweise durch unterschiedliche Farben der Leuchtelemente oder durch ein unterschiedliches Muster der jeweils leuchtenden Leuchtelemente signalisiert werden. Akustisch können die verschiedenen Betriebszustände der berührungsempfindlichen Oberfläche über unterschiedliche Signalfolgen (Earcons, Auditory Icons) signalisiert werden.

Zusätzlich zu einer kontextabhängigen Aktivierung kann man vorsehen, dass die berührungsempfindliche Oberfläche des Bedienfeldes auch über einen Schalter oder ein anderes Bedienelement aktiviert und deaktiviert werden kann. Dies ist besonders dann vorteilhaft, wenn die berührungsempfindliche Oberfläche beispielsweise in das Lenkrad eingelassen ist und die Bedienung über diese berührungsempfindliche Oberfläche lediglich alternativ zu anderen Bedienelementen, beispielsweise einem bereits in der Mittelkonsole vorhandenen Bedienfeld mit berührungsempfindlicher Oberfläche oder einem bereits vorhandene Display mit berührungsempfindlicher Oberfläche, erfolgen soll. Der Benutzer kann dann, je nach Wunsch, das Bedienfeld mit berührungsempfindlicher Oberfläche im Lenkrad komplett deaktivieren oder aktivieren.

Das erfindungsgemäße Verfahren ist besonders vorteilhaft, wenn das Bedienfeld mit der berührungsempfindlichen Oberfläche im Lenkrad eines Fahrzeugs angeordnet ist. Hier befindet sich das Bedienfeld im direkten Sichtbereich des Fahrers, so dass eine Signalisierung des Aktivierungszustandes der berührungsempfindlichen Oberfläche besonders effektiv und ohne jegliche Ablenkung von der Fahrzeuglenkung erfolgen kann.

Bevorzugt sind dabei mehrere Bedienfelder mit berührungsempfindlicher Oberfläche in dem Lenkrad angeordnet. Die Bedienfelder können dabei auch unterschiedliche Aktivierungszustände besitzen. Beispielsweise kann vorgesehen sein, ein Bedienfeld vorzugsweise zur Handschrifterkennung zu verwenden, während ein anderes Bedienfeld vorzugsweise für Gesten, wie Scrollbewegungen und ähnliches verwendet wird. Außerdem kann man vorsehen, dass der bevorzugte Funktionsmodus der einzelnen Bedienfelder über die Menüsteuerung des zu bedienenden elektronischen Gerätes oder über einen Schalter oder ein anderes Bedienelement vorgegeben werden kann. Somit können beispielsweise Rechts- und Linkshänder das Bedienfeld für die Schrifterkennung entweder auf ein rechts oder ein links am Lenkrad angeordnetes Bedienfeld legen.

Die Erfindung betrifft schließlich auch eine Vorrichtung zum Bedienen eines elektronischen Geräts eines Kraftfahrzeugs mit einem Bedienfeld, das eine als Touchpad ausgebildete berührungsempfindliche Oberfläche in einem Lenkrad oder einer Mittelkonsole des Kraftfahrzeugs umfasst, einer Signalisierungseinrichtung des Aktivierungszustandes der berührungsempfindlichen Oberfläche und einer Steuereinrichtung, die mit dem Bedienfeld, der berührungsempfindlichen Oberfläche und der Signalisierungseinrichtung einerseits, sowie dem zu bedienenden elektronischen Gerät andererseits gekoppelt ist, wobei die Steuereinrichtung zur Durchführung des oben beschriebenen erfindungsgemäßen Verfahrens ausgelegt ist. Die Steuereinrichtung ist daher insbesondere in der Lage, die berührungsempfindliche Oberfläche zumindest in einen inaktiven bzw. aktiven Zustand zu schalten und gleichzeitig über die Signalisierungseinrichtung den Aktivierungszustand der berührungsempfindlichen Oberfläche optisch und/oder akustisch zu signalisieren.

Vorzugsweise umfasst die Signalisierungseinrichtung Leuchtelemente zur optischen Signalisierung des Aktivierungszustandes der berührungsempfindlichen Oberfläche. Dies ist einerseits mit einer besonders deutlichen Signalisierung des Aktivierungszustandes der berührungsempfindlichen Oberfläche verbunden, ohne andererseits den Benutzer bei anderen Aktivitäten, wie dem Führen eines Kraftfahrzeugs, zu stören.

Vorzugsweise bilden die Leuchtelemente einen die berührungsempfindliche Oberfläche zumindest teilweise umgebenden Rahmen, so dass die Leuchtelemente nicht nur den Aktivierungszustandes der berührungsempfindlichen Oberfläche sondern gleichzeitig auch die räumliche Ausdehnung der berührungsempfindlichen Oberfläche anzeigen, so dass eine zuverlässige Bedienung auch bei schlechten Lichtverhältnissen gewährleistet ist. Die Berührungsempfindliche Oberfläche selbst kann auch beleuchtet oder selbstleuchtend sein und so ihren Aktivierungszustand anzeigen.

Mit dem erfindungsgemäßen Verfahren du der erfindungsgemäßen Vorrichtung lassen sich unterschiedlichste Geräte bedienen, die auch bisher über ein Bedienfeld mit berührungsempfindlicher Oberfläche bedient werden. Das mit der erfindungsgemäßen Vorrichtung zu bedienende elektronische Gerät kann insbesondere ein Infotainmentsystem eines Fahrzeugs, beispielsweise eines Kraftfahrzeugs sein.

Die erfindungsgemäße Vorrichtung kann dabei ein integrierter Bestandteil des Infotainmentsystems des Fahrzeugs sein und beispielsweise über einen zu dem Infotainmentsystem gehörenden berührungsempfindlichen Bildschirm bedient werden. Alternativ kann die erfindungsgemäße Vorrichtung aber auch ein mit dem Infotainmentsystem des Fahrzeugs kommunizierendes Mobilgerät, insbesondere ein Mobiltelefon, ein Smartphone, oder ein Personal Digital Assistant (PDA) sein, wobei die berührungsempfindliche Oberfläche des Mobilgeräts über die Steuereinrichtung des Infotainmentsystems aktiviert und inaktiviert werden kann und der Aktivierungszustand beispielsweise über eine entsprechende Displaygestaltung auf dem Display des Mobilgerätes angezeigt werden kann. Die entsprechende Funktionalität kann dann beispielsweise über ein Applikationsprogramm (eine sogenannte App) auf dem Mobilgerät implementiert werden.

Die Erfindung wird nun anhand von Ausführungsbeispielen unter Bezugnahme auf die beigefügten Zeichnungen näher erläutert.

In den Zeichnungen zeigt
- Fig. 1: das Cockpit eines Fahrzeugs mit zwei Varianten der erfindungsgemäßen Vorrichtung;
- Fig. 2: eine Detailansicht eines Lenkrades das mit zwei erfindungsgemäßen Bedienfeldern versehen ist; und
- Fig. 3: den schematischen Aufbau einer Vorrichtung zum Bedienen eines elektronischen Geräts gemäß einem Ausführungsbeispiel der Erfindung.

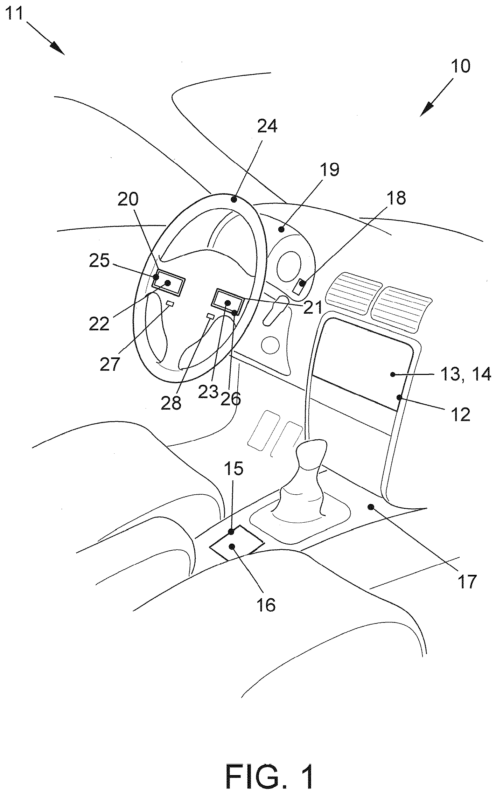

Fig. 1 zeigt das Cockpit 10 eines Fahrzeugs 11, das mit zwei Varianten einer erfindungsgemäßen Vorrichtung zum Bedienen eines elektronischen Geräts ausgestattet ist.

Das Fahrzeug 11 weist ein Infotainmentsystem 12 auf, in welchem Steuerungssysteme für wichtige Fahrzeugfunktionen wie Klimaanlage, Audiosystem und Navigationssystem zusammengefasst sind. Das Infotainmentsystem 12 umfasst dazu ein als Anzeigefläche dienendes Display 13, insbesondere zur graphischen Darstellung von Auswahlmenüs, Listen, Eingabeaufforderungen, Schaltflächen, Bildern und anderen Multimediaobjekten. Bei dem Display 13 kann es sich um ein beliebiges, aus dem Stand der Technik bekanntes und für diesen Zweck geeignetes Display handeln, welches an einer zentralen Stelle im Cockpit 10, z. B. im oberen Bereich der Mittelkonsole angeordnet ist.

Das Display 13 ist vorzugsweise mit einer berührungsempfindlichen Oberfläche 14 ausgestattet, über welche verschiedene Bediengesten des Nutzers, die beispielsweise mit einem Touchpad-Stift oder einem Finger ausgeführt werden, erfassbar sind.

Anstelle oder zusätzlich zu der berührungsempfindlichen Oberfläche 14 des Displays 13 sind weitere Bedienfelder mit berührungsempfindlicher Oberfläche vorgesehen, die vom Benutzer leichter erreicht werden können und/oder sich in seinem unmittelbaren Gesichtsfeld befinden.

Gemäß einer ersten Variante ist ein Bedienfeld 15 mit einer berührungsempfindlichen Oberfläche 16 in der Mittelkonsole 17 des Fahrzeugs 11 angeordnet. Die Steuereinrichtung des Infotainmentsystems 12 kann die Aktivität der berührungsempfindlichen Oberfläche 16 zwischen einem aktiven und einem inaktiven Zustand schalten, wobei der aktive Zustand im dargestellten Beispiel über eine Leuchtelement 18 im Armaturenbrett 19 des Fahrzeugs 11 angezeigt wird, so dass der Benutzer nicht erst zu dem Bedienfeld 15 hinabblicken muss, oder die Aktivierung der berührungsempfindlichen Oberfläche 16 des Bedienfeldes 15 über eine Reaktion auf dem Display 13 des Infotainmentsystems 12 überprüfen muss.

Gemäß einer anderen Variante sind zwei Bedienfelder 20, 21 mit zugehörigen berührungsempfindlichen Oberflächen 22, 23 im Lenkrad 24 des Fahrzeugs 11 angeordnet. Die beiden Bedienfelder 20, 21 weisen jeweils Leuchtelemente 25 bzw. 26 auf, welche die berührungsempfindlichen Oberflächen 22, 23 umgeben. Im aktiven Zustand der berührungsempfindlichen Oberflächen 22, 23 zeigen die Leuchtelemente 25, 26 also nicht nur den Aktivierungszustand der berührungsempfindlichen Oberflächen 22 und 23 an, sondern signalisieren gleichzeitig den berührungsempfindlichen Bereich des Lenkrades. Im Lenkrad 24 sind außerdem zwei Schalter 27, 28 vorgesehen, mit den sich die berührungsempfindlichen Oberfläche 22, 23 manuell aktivieren und deaktivieren lassen.

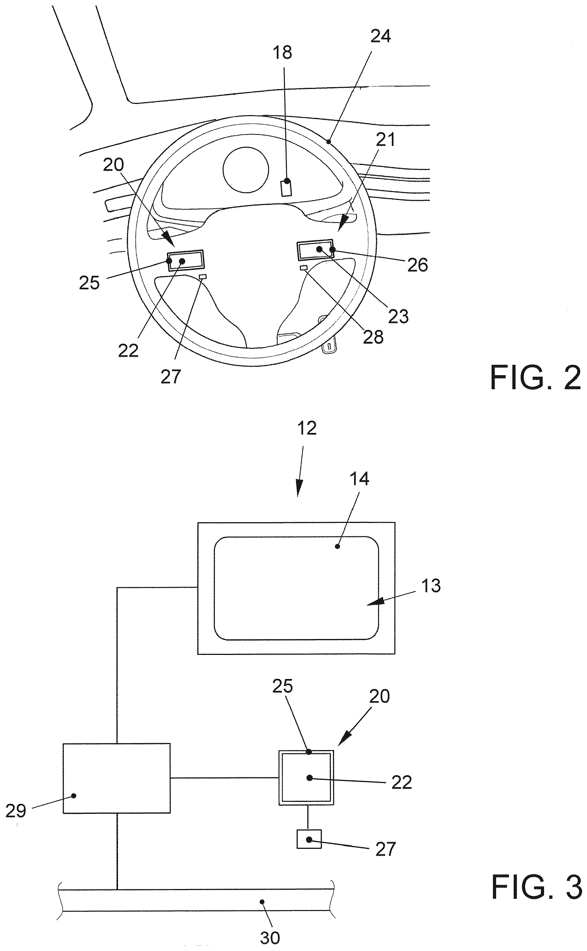

In Fig. 2 ist das Lenkrad 24 des Fahrzeugs der Fig. 1 mit den beiden Bedienfeldern 20, 21 mit den berührungsempfindlichen Oberflächen 22, 23 in der Draufsicht detaillierter dargestellt.

Fig. 3 zeigt eine schematische Anordnung des Infotainmentsystems 12, das über eine Steuereinrichtung 29 und einen Datenbus 30 mit (nicht dargestellten) Funktionseinheiten des Fahrzeugs 11, wie Klimaanlage, Navigationssystem oder Audiosystem verbunden ist. Die Steuereinrichtung 29 kann die berührungsempfindliche Oberfläche 22 des beispielhaft dargestellten Bedienfeldes 20 aktivieren und deaktivieren. Bei Aktivierung des Bedienfeldes 20 wird gleichzeitig das Leuchtelement 25, welches das Bedienfeld umgibt eingeschaltet. Im aktivierten Zustand der berührungsempfindliche Oberfläche 22 empfängt die Steuereinrichtung 29 auch die über das Bedienfeld 20 eingegebene Daten und wertet sie aus.

### Bezugszeichenliste

- 10: Cockpit
- 11: Fahrzeug
- 12: Infotainmentsystem
- 13: Display des Infotainmentsystems 12
- 14: berührungsempfindliche Oberfläche des Displays 13
- 15: Bedienfeld
- 16: berührungsempfindliche Oberfläche des Bedienfeldes 15
- 17: Mittelkonsole
- 18: Leuchtelement
- 19: Armaturenbrett
- 20: Bedienfeld
- 21: Bedienfeld
- 22: berührungsempfindliche Oberfläche des Bedienfeldes 20
- 23: berührungsempfindliche Oberfläche des Bedienfeldes 21
- 24: Lenkrad
- 25: Leuchtelement des Bedienfelds 20
- 26: Leuchtelement des Bedienfelds 21
- 27: Schalter für Bedienfeld 20
- 28: Schalter für Bedienfeld 21
- 29: Steuereinrichtung
- 30: Datenbus

## Patentansprüche

1. Verfahren zum Bedienen eines elektronischen Gerätes (12) eines Kraftfahrzeugs, bei dem wenigstens eine Funktion des elektronischen Geräts (12) über ein Bedienfeld (15, 20, 21) mit einer berührungsempfindlichen Oberfläche (16, 22, 23) in einem Lenkrad (24) oder einer Mittelkonsole (17) des Kraftfahrzeugs gesteuert wird, wobei die berührungsempfindliche Oberfläche (16, 22, 23) als Touchpad ausgebildet ist und bei laufendem elektronischen Gerät zumindest zwischen einem inaktiven und einem aktiven Zustand umschaltbar ist, wobei die Umschaltung abhängig davon erfolgt, ob eine Bediensituation eine Eingabe über die berührungsempfindliche Oberfläche erwartet, und man dem Benutzer den Aktivierungszustand der berührungsempfindlichen Oberfläche (16, 22, 23) signalisiert.

2. Verfahren gemäß Anspruch 1, **dadurch gekennzeichnet, dass** die Signalisierung des Aktivierungszustands der berührungsempfindlichen Oberfläche (16, 22, 23) optisch und/oder akustisch erfolgt.

3. Verfahren gemäß einem der Ansprüche 1 oder 2, **dadurch gekennzeichnet, dass** die Aktivierung der berührungsempfindlichen Oberfläche (16, 22, 23) kontextabhängig erfolgt.

4. Verfahren gemäß einem der Ansprüche 1 bis 3, **dadurch gekennzeichnet, dass** neben dem inaktiven und dem aktiven Zustand weitere Betriebszustände der berührungsempfindlichen Oberfläche (16, 22, 23) signalisiert werden.

5. Verfahren gemäß einem der Ansprüche 1 bis 4, **dadurch gekennzeichnet, dass** die berührungsempfindliche Oberfläche (16, 22, 23) zusätzlich zu einer kontextabhängigen Aktivierung auch über einen Schalter (27, 28) aktiviert und deaktiviert wird.

6. Verfahren gemäß Anspruch 1, **dadurch gekennzeichnet, dass** mehrere Bedienfelder (20, 21) mit berührungsempfindlicher Oberfläche (22, 23) in dem Lenkrad (24) angeordnet sind.

7. Vorrichtung zum Bedienen eines elektronischen Geräts (12) eines Kraftfahrzeugs mit einem Bedienfeld (15, 20, 21), das eine als Touchpad ausgebildete berührungsempfindliche Oberfläche (16, 22, 23) in einem Lenkrad (24) oder einer Mittelkonsole (17) des Kraftfahrzeugs umfasst, einer Signalisierungseinrichtung (18, 25, 26) des Aktivierungszustandes der berührungsempfindlichen Oberfläche (16, 22, 23) und einer Steuereinrichtung (29), die mit dem Bedienfeld (15, 20, 21), der berührungsempfindlichen Oberfläche (16, 22, 23) und der Signalisierungseinrichtung (18, 25, 26) einerseits, sowie dem zu bedienenden elektronischen Gerät (12) andererseits gekoppelt ist, wobei die Steuereinrichtung (29) zur Durchführung des Verfahrens nach einem der Ansprüche 1 bis 6 ausgelegt ist.

8. Vorrichtung gemäß Anspruch 7, **dadurch gekennzeichnet, dass** die Signalisierungseinrichtung Leuchtelemente (18, 25, 26) zur optischen Signalisierung des Aktivierungszustandes der berührungsempfindlichen Oberfläche (16, 22, 23) umfasst.

9. Vorrichtung gemäß Anspruch 7, **dadurch gekennzeichnet, dass** die Leuchtelemente (25, 26) einen die berührungsempfindliche Oberfläche (22, 23) umgebenden Rahmen bilden.

## Claims

1. A method for operating an electronic device (12) of a motor vehicle, in which at least one function of the electronic device (12) is controlled via a control panel (15, 20, 21) with a touch-sensitive surface (16, 22, 23) in a steering wheel (24) or a center console (17) of the motor vehicle, wherein the touch-sensitive surface (16, 22, 23) is designed as a touch pad and while the electronic device is running is switchable at least between an inactive and an active state, wherein the switching occurs depending on whether an operating situation expects an input via the touch-sensitive surface, and the activation state of the touch-sensitive surface (16, 22, 23) is signaled to the user.

2. The method according to Claim 1, **characterized in that** the signaling of the activation state of the touch-sensitive surface (16, 22, 23) occurs optically and/or acoustically.

3. The method according to any one of Claims 1 or 2, **characterized in that** the activation of the touch-sensitive surface (16, 22, 23) occurs depending on the context.

4. The method according to any one of Claims 1 to 3, **characterized in that** in addition to the inactive and the active state further operating states of the touch-sensitive surface (16, 22, 23) are signaled.

5. The method according to any one of Claims 1 to 4, **characterized in that** the touch-sensitive surface (16, 22, 23) in addition to a context-dependent activation is also activated and deactivated via a switch (27, 28).

6. The method according to Claim 1, **characterized in that** a plurality of control panels (20, 21) with touch-sensitive surface (22, 23) are arranged in the steering wheel (24).

7. A device for operating an electronic device (12) of a motor vehicle with a control panel (15, 20, 21), which comprises a touch-sensitive surface (16, 22, 23) designed as a touch pad in a steering wheel (24) or a center console (17) of the motor vehicle, a signaling device (18, 25, 26) of the activation state of the touch-sensitive surface (16, 22, 23) and a control device (29), which is coupled with the control panel (15, 20, 21), the touch-sensitive surface (16, 22, 23) and the signaling device (18, 25, 26) on the one hand, and the electronic device (12) to be operated on the other hand, wherein the control device (29) is configured to implement the method according to any one of Claims 1 to 6.

8. The device according to Claim 7, **characterized in that** the signaling device comprises lighting elements (18, 25, 26) for the optical signaling of the activation state of the touch-sensitive surface (16, 22, 23).

9. The device according to Claim 7, **characterized in that** the lighting elements (25, 26) form a frame surrounding the touch-sensitive surface (22, 23).

## Revendications

1. Procédé de contrôle d'un appareil électronique (12) d'un véhicule automobile, dans lequel au moins une fonction de l'appareil électronique (12) est contrôlé par l'intermédiaire d'un panneau de commande (15, 20, 21) avec une surface tactile (16, 22, 23) dans un volant (24) ou une console centrale (17) du véhicule automobile, la surface tactile (16, 22, 23) étant conçue comme un pavé tactile et pouvant être commutée, lorsque l'appareil électronique est en marche, entre un état actif et un état inactif, la commutation ayant lieu en fonction du fait qu'une situation de commande exige ou non une entrée par l'intermédiaire de la surface tactile et si on signale à l'utilisateur l'état d'activation de la surface tactile (16, 22, 23).

2. Procédé selon la revendication 1, **caractérisé en ce que** la signalisation de l'état d'activation de la surface tactile (16, 22, 23) a lieu de manière optique et/ou acoustique.

3. Procédé selon l'une des revendications 1 ou 2, **caractérisé en ce que** l'activation de la surface tactile (16, 22, 23) a lieu en fonction du contexte.

4. Procédé selon l'une des revendications 1 à 3, **caractérisé en ce que**, en plus de l'état inactif et de l'état actif, des états de fonctionnement supplémentaires de la surface tactile (16, 22, 23) sont signalés.

5. Procédé selon l'une des revendications 1 à 4, **caractérisé en ce que** la surface tactile (16, 22, 23) est activée ou désactivée, en plus d'une activation en fonction du contexte, également par l'intermédiaire d'un commutateur (27, 28).

6. Procédé selon la revendication 1, **caractérisé en ce que** plusieurs panneaux de commande (20, 21) sont disposés dans le volant (24) avec la surface tactile (22, 23).

7. Dispositif de contrôle d'un appareil électronique (12) d'un véhicule automobile avec un panneau de commande (15, 20, 21) qui comprend une surface tactile (16, 22, 23) conçue comme un pavé tactile dans un volant (24) ou une console centrale (17) du véhicule automobile, un dispositif de signalisation (18, 25, 26) de l'état d'activation de la surface tactile (16, 22, 23) et un dispositif de commande (29) qui est couplée avec le panneau de commande (15, 20, 21), la surface tactile (16, 22, 23) et le dispositif de signalisation, d'une part et avec l'appareil électronique (12) à contrôler d'autre part, le dispositif de commande (29) étant conçu pour l'exécution du procédé selon l'une des revendications 1 à 6.

8. Dispositif selon la revendication 7, **caractérisé en ce que** le dispositif de signalisation comprend des éléments lumineux (18, 25, 26) pour la signalisation optique de l'état d'activation de la surface tactile (16, 22, 23).

9. Dispositif selon la revendication 7, **caractérisé en ce que** les éléments lumineux (25, 26) forment un cadre entourant la surface tactile (22, 23).
